**Europäisches Patentamt**

**European Patent Office**

**Office européen des brevets**

(19)

(11) Veröffentlichungsnummer : **0 344 671 B1**

# (12) EUROPÄISCHE PATENTSCHRIFT

(45) Veröffentlichungstag der Patentschrift :
**22.04.92 Patentblatt 92/17**

(51) Int. Cl.[5] : **B64C 11/06,** F04D 29/32,
F01D 5/30

(21) Anmeldenummer : **89109622.4**

(22) Anmeldetag : **29.05.89**

(54) Vorrichtung zur Befestigung einer verschwenkbaren Propfanschaufel.

(30) Priorität : **31.05.88 DE 3818466**

(43) Veröffentlichungstag der Anmeldung :
**06.12.89 Patentblatt 89/49**

(45) Bekanntmachung des Hinweises auf die
Patenterteilung :
**22.04.92 Patentblatt 92/17**

(84) Benannte Vertragsstaaten :
**CH DE FR GB IT LI NL SE**

(56) Entgegenhaltungen :
**DE-A- 2 333 274**
**FR-A- 1 578 306**
**FR-A- 2 312 673**

(73) Patentinhaber : **MTU MOTOREN- UND
TURBINEN-UNION MÜNCHEN GMBH
Dachauer Strasse 665 Postfach 50 06 40
W-8000 München 50 (DE)**

(72) Erfinder : **Rohra, Alois
Bacher Strasse 45
W-8000 München 45 (DE)**

EP 0 344 671 B1

## Beschreibung

Die Erfindung betrifft eine Vorrichtung zur Befestigung einer ummantelten verschwenkbaren Propfanschaufel an einem Rotor, bei der die Propfanschaufel an einem Schaufelträger befestigt ist und dieser über ein Wälzlager um eine triebwerksradiale Achse schwenkbar im Rotor gelagert ist.

Eine derartige Vorrichtung ist aus der DE-A-23 33 274 bekannt geworden, bei der die Propfanschaufel nach radial außen entfernt werden muß.

Aus der DE-C-26 22 235 ist eine Vorrichtung zum Verschwenken von Propfanschaufeln eines Turbotriebwerk bekannt, bei der jeweils ein Schaft einer Propfanschaufel in einem Rotor drehbar gelagert ist. Am Schaft ist ein radial innen angeordnetes Zahnrad befestigt, das mit im Rotor gelagerten Zahnkränzen zum Zweck des Verschwenkens der Propfanschaufel im Eingriff steht.

Diese Anordnungen haben den Nachteil, daß bei Beschädigung einer Schaufel deren Ausbau sehr aufwendig ist. So muß bei letzterer zunächst das innenliegende Zahnrad entfernt werden, bevor die Schaufel radial nach außen abziehbar ist. Insbesondere bei Propfantriebwerken mit einer Ummantelung radial außerhalb der Propfanschaufeln ist dazu eine Öffnung in der Ummantelung vorzusehen. Dies erfordert einen erhöhten Montageaufwand und steigert das Risiko einer Beschädigung der Ummantelung.

Hiervon ausgehend ist es Aufgabe der Erfindung, eine Befestigung für eine verschwenkbare Propfanschaufel zu schaffen, die ein einfaches Ausbauen bzw. Auswechseln der Propfanschaufel auch bei Vorhandensein einer Ummantelung gewährleistet. Insbesondere soll dabei im Rotorinneren oder im Verschwenkmechanismus kein Eingriff erforderlich sein.

Erfindungsgemäß wird die Aufgabe durch die im Kennzeichen des Patentanspruchs 1 oder 11 angegebenen Merkmale gelöst.

Hierdurch läßt sich vorteilhafterweise erreichen, daß eine auszutauschende Propfanschaufel nicht nach radial außen entfernt werden muß, und somit keine Veränderungen an der Umhüllung erforderlich sind. Die Entfernung der Propfanschaufel geschieht vorteilhafterweise dadurch, daß nach Entfernen der ersten Sicherung die Schaufel axial aus der Schwalbenschwanzführung entfernbar ist und, soweit erforderlich der Schaufelträger anschließend nach Entfernen der zweiten Sicherung radial herausziehbar ist.

Eine Entfernung der Propfanschaufel oder des Schaufelträgers bzw. dessen Lagerung ist ohne Eingriff in den Schaufelverstellmechanismus bzw. die zugehörige Hydraulik möglich. Dadurch ist eine wesentliche Verkürzung und Vereinfachung des Reparaturvorganges von Schaufel oder Schaufellagerung erzielbar.

In vorteilhafter Weiterbildung der Erfindung ist der Schaufelträger mittels einer Verzahnung mit dem Schwenkhebel drehsteif verbunden. Dies ermöglicht eine platzsparende lösbare Verbindung, die auf einfache Weise außer Eingriff zu bringen ist. Die Verzahnung kann alternativ als einfache Radialverzahnung oder als Keilverzahnung ausgebildet sein.

Eine weitere vorteilhafte Ausgestaltung der Erfindung sieht vor, daß ein hülsenartiges Zwischenglied mit dem Schaufelträger unter Fixierung, d. h. Einspannung des Lagerinnenringes über ein Gewinde verbunden ist, und an seine Innenfläche die Verzahnung aufweist. Hierdurch ist eine günstige Lagerringfixierung mit der Möglichkeit einer einfachen radialen Entfernung des Schaufelträgers vorteilhafterweise kombiniert.

Weiterhin ist vorgesehen, daß eine von außen zugängliche Spannmutter unter Einspannung eines Lageraußenringes über ein Gewinde mit dem Rotor verbunden ist. Dies ermöglicht eine einfache Lösung des Schaufelträgers ohne Eingriffe in die Drehlagerung oder das Rotorinnere.

Vorzugsweise ist der Schaufelträger mittels eines zweireihigen Kegelrollenlagers gelagert, wodurch eine günstige Aufnahme der im Betrieb auftretenden Belastungen erzielbar ist.

Vorzugsweise ist die Schwalbenschwanzhalterung gegenüber der Rotorachse geneigt. Dadurch ist bei Entfernung einer Propfanschaufel eine Vergrößerung des Spitzenspaltes erzielbar, wodurch die Gefahr von Beschädigungen an der Schaufelspitze oder vorgesehenen Anstreifbelägen in der Ummantelung herabgesetzt wird.

Eine weitere Ausbildung der Erfindung sieht vor, daß eine oder mehrere Sicherungsplatten zur axialen Sicherung der Propfanschaufel vorgesehen sind, die in Quernuten des Schaufelträgers und eines schwalbenschwanzartig ausgebildeten Schaufelfußes von radial innen eingepaßt sind, und von einem axial unter dem Schaufelfuß eingeschobenen Sicherungskeils gesichert sind. Dadurch ist eine einfache lösbare axiale Fixierung der Propfanschaufel erreichbar, die ferner geringes Gewicht aufweist.

In vorteilhafter Weiterbildung der Erfindung ist die Schwalbenschwanzhalterung bogenförmig ausgeführt, wodurch eine günstige Anpassung an die Profilform der Propfanschaufel gewährleistet ist.

Gemäß einer alternativen Lösung der der Erfindung zugrunde liegenden Aufgabe ist die Propfanschaufel mittels Klemmringsegmenten am Schaufelträger angebracht. Dadurch ist eine einfache Montage und Demontage der Propfanschaufel möglich. Vorzugsweise besteht der im Querschnitt U-förmige Klemmring aus zwei Halbringen, die mittels von Verbindungsflanschen unter Spannung zusammengefügt sind. Es ist auch denkbar,

2

den Klemmring nur an einer Stelle zu teilen, so daß die Demontage durch elastisches Aufbiegen des Klemmringes erfolgt.

Die Erfindung wird nachfolgend anhand der beigefügten Zeichnungen weiter erläutert. Dabei zeigt:

Fig. 1: einen Axialschnitt durch eine Propfanschaufelbefestigung,

Fig. 2: die Anordnung gemäß Fig. 1 im Querschnitt,

Fig. 3: einen Axialschnitt durch eine weitere Propfanschaufelbefestigung,

Fig. 4: eine Ansicht einer Propfanschaufel von oben,

Fig. 5: eine weitere Propfanschaufel von oben.

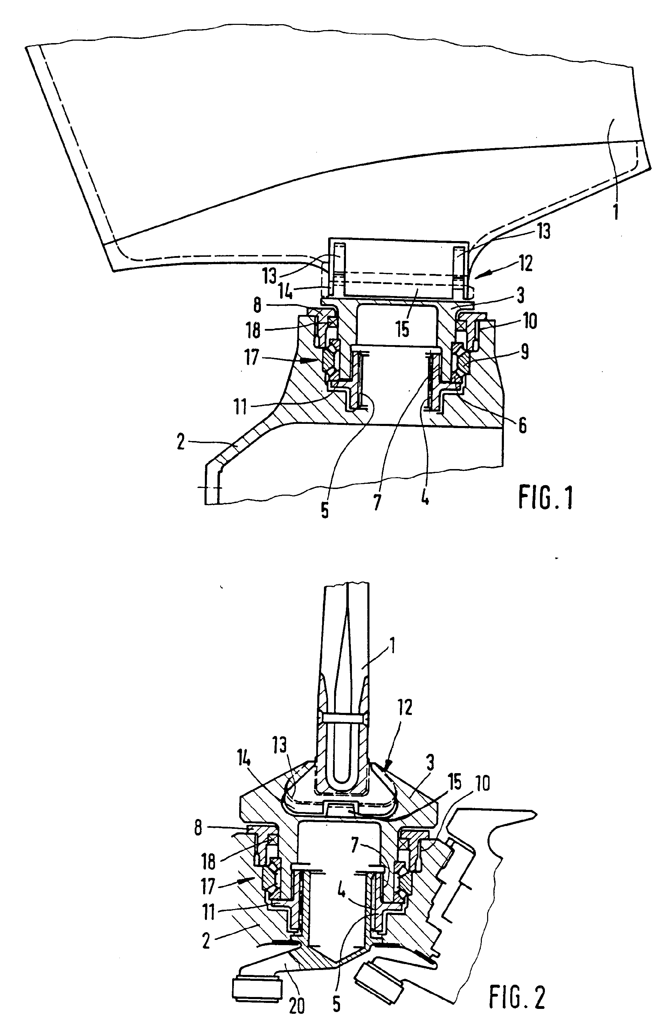

Das in Fig. 1 gezeigte Propfanschaufelblatt 1 ist mittels einer Schwalbenschwanzhalterung 12 an einem rotationssymmetrischen Schaufelträger 3 angebracht. Die Fixierung in triebwerksaxialer Richtung erfolgt dabei durch zwei in radialen Nuten des Schaufelfußes 14 untergebrachten Sicherungsplatten 13. Diese wiederum werden durch einen axial unter den Schaufelfuß 14 einzusteckenden Sicherungskeil 15 in Position gehalten.

Der Schaufelträger 13 ist mittels eines zweireigien Kegelrollenlagers 17 im Rotor 2 drehbar gelagert. Dabei ist der Lageraußenring 9 des Kegelrollenlagers 17 mittels der Spannmutter 8 im Rotor 2 verspannt. Die Spannmutter 8 ist dabei von außen zugänglich und mittels des Gewindes 10 am Rotor 2 befestigt. Zwischen der Spannmutter 8 und dem Schaufelträger 3 ist ferner eine Dichtung 18 zur Abdichtung des Lagers 17 nach außen vorgesehen.

Der geteilte Innenring 6 des Lagers 17 ist mittels des Zwischengliedes 5 im Schaufelträger 3 verspannt. Das über ein Gewinde 7 im Schaufelträger 3 verschraubte hülsenartige Zwischenglied 5 weist an seiner inneren Umfangsfläche eine Verzahnung 4 auf, in die eine entsprechende Verzahnung eines Schwenkhebels 20 eingepaßt ist, wie in Fig. 2 gezeigt ist.

Zum Zwecke der Verspannung des Schaufelinnenringes 6 ist am Zwischenglied 5 ein Außenringflansch 11 angebracht.

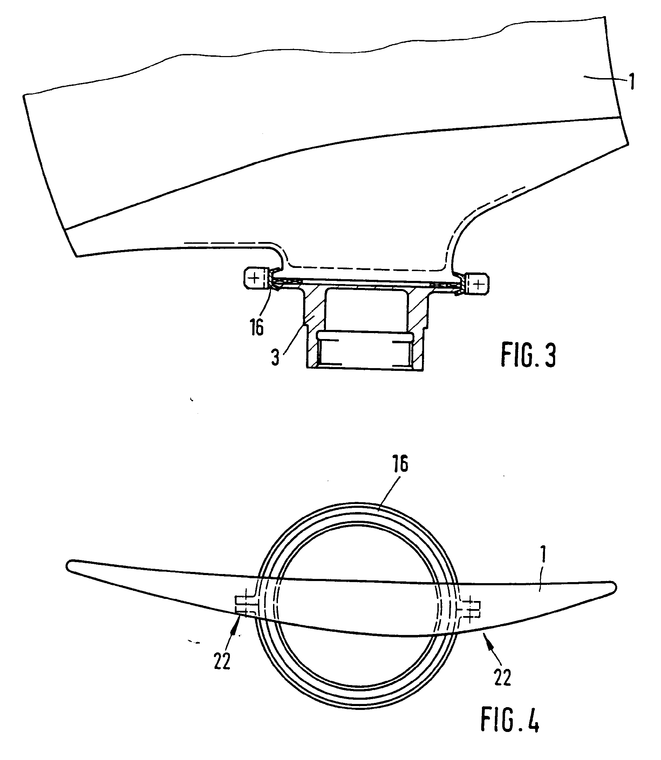

In Fig. 3 ist eine alternative Befestigungsmöglichkeit der Propfanschaufel 1 am Schaufelträger 3 dargestellt. Dazu ist ein aus zwei Ringsegmenten bestehender Klemmring 16 vorgesehen, der an zwei gegenüberliegenden Stellen 22 verschraubt und verspannt ist, wie aus Fig. 4 ersichtlich ist.

Zur Demontage des Propfanschaufelblattes 1 gemäß der in Fig. 1 gezeigten Ausführung wird zunächst der Sicherungskeil 15 in axialer Richtung unter dem Schaufelfuß 14 herausgezogen. Sodann rutschen die Sicherungsplatten 13 nach radial innen, und nehmen somit die gleiche Umfangskontur wie der schwalbenschwanzartige Schaufelfuß 14 ein. Anschließend wird der Schaufelfuß 14 in axialer Richtung aus dem Schaufelträger 3 herausgezogen. Ist eine Entfernung des Schaufelträgers erforderlich, so wird die von außen zugängliche Spannmutter 8 aufgeschraubt. Anschließend ist der Schaufelträger 3 in radialer Richtung nach oben herausziehbar, wobei das Lager 17 am Schaufelträger 3 befestigt bleibt.

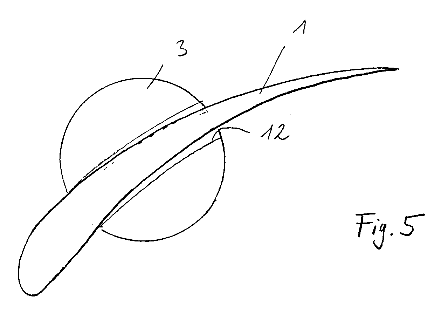

In Fig. 5 ist ein Propfanschaufelblatt 1 aus radialer Sicht von oben gezeigt, wobei zu erkennen ist, daß die Schwalbenschwanzhalterung 12 zur Befestigung des Propfanschaufelblattes 1 am Schaufelträger 3 in Anpassung an die Blattkrümmung bogenförmig ausgebildet ist.

## Patentansprüche

1. Vorrichtung zur Befestigung einer ummantelten verschwenkbaren Propfanschaufel (1) an einem Rotor (2), bei der die Propfanschaufel (1) an einem Schaufelträger (3) befestigt ist und dieser über ein Wälzlager (17) um eine triebwerksradiale Achse schwenkbar im Rotor (2) gelagert ist, dadurch gekennzeichnet, daß die Propfanschaufel (1) in einer Schwalbenschwanzhalterung (12) im Schaufelträger (3) gehalten ist und mittels einer ersten Sicherung (13,15) gegen Axialbewegung der Propfanschaufel (1) fixiert ist und der Schaufelträger (3) mittels einer von außen zugänglichen zweiten Sicherung (8) gegen radiale Bewegung gesichert ist.

2. Vorrichtung nach Anspruch 1, dadurch gekennzeichnet, daß der Schaufelträger (3) mittels einer Verzahnung (4) mit einem Schwenkhebel (20) drehsteif verbunden ist.

3. Vorrichtung nach Anspruch 2, dadurch gekennzeichnet, daß die Verzahnung (4) eine Keilverzahnung ist.

4. Vorrichtung nach einem der Ansprüche 1 bis 3, dadurch gekennzeichnet, daß ein hülsenartiges Zwischenglied (5) mit dem Schaufelträger (3) unter Fixierung eines Lagerinnenringes (6) des Wälzlagers (17) über ein Gewinde (7) verbunden ist, und an seiner Innenfläche die Verzahnung (4) aufweist.

5. Vorrichtung nach einem der Ansprüche 1 bis 4, dadurch gekennzeichnet, daß eine von außen zugängliche Spannmutter (8) unter Fixierung eines Lageraußenringes (9) des Wälzlagers (17) über ein Gewinde (10) mit dem Rotor (2) verbunden ist.

6. Vorrichtung nach einem der Ansprüche 1 bis 5, dadurch gekennzeichnet, daß der Schaufelträger (3) mittels eines zweireihigen Kegelrollenlagers gelagert ist.

7. Vorrichtung nach einem der Ansprüche 4 bis 6, dadurch gekennzeichnet, daß das Zwischenglied (5) mit einem Außenringflansch (11) versehen ist, der den Lagerinnenring (6) gegen den Schaufelträger (3) verspannt.

8. Vorrichtung nach Anspruch 1, dadurch gekennzeichnet, daß die Schwalbenschwanzhalterung (12) gegenüber der Rotorachse geneigt ist.

9. Vorrichtung nach Anspruch 8, dadurch gekennzeichnet, daß Sicherungsplatten (13) zur axialen Sicherung der Propfanschaufel (1) vorgesehen sind, die in Quernuten des Schaufelträgers und eines schwalbenschwanzartig ausgebildeten Schaufelfußes (14) radial innen eingepaßt sind, und von einem axial unter dem Schaufelfuß (14) eingeschobenen Sicherungskeil (15) gesichert sind.

10. Vorrichtung nach einem der Ansprüche 8 oder 9, dadurch gekennzeichnet, daß die Schwalbenschwanzhalterung (12) angepaßt an die Schaufelprofilkontur bogenförmig ausgeführt ist.

11. Vorrichtung zur Befestigung einer ummantelten verschwenkbaren Propfanschaufel (1) an einem Rotor (2), bei der die Propfanschaufel (1) an einem Schaufelträger (3) befestigt ist, und dieser über ein Wälzlager (17) um eine triebwerksradiale Achse schwenkbar im Rotor (2) gelagert ist, dadurch gekennzeichnet, daß die Propfanschaufel (1) einen scheibenförmigen Schaufelfuß aufweist, der mittels eines geteilten Klemmringes (16) im angepaßten scheibenförmigen Oberteil des Schaufelträgers (3) lösbar befestigt ist, und der Schaufelträger (3) mittels in einer von außen zugänglichen Sicherung (8) gegen radiale Bewegung gesichert ist.

## Claims

1. A device for fixing an encased pivotable prop-fan blade (1) on a rotor (2), in which the prop-fan blade (1) is mounted on a blade carrier (3) which is in turn mounted in the rotor (2) via a rolling-type bearing (17) to pivot about an axis which is radial in relation to the propulsion unit, characterised in that the prop-fan blade (1) is supported in a dovetail holder (12) in the blade carrier (3) and is by means of a first retaining device (13, 15) secured against axial movement of the prop-fan blade (1) while the blade carrier (3) is protected from radial movement by a second retaining device (8) which is accessible from outside.

2. A device according to Claim 1, characterised in that the blade carrier (3) is rotationally rigidly connected to a pivot lever (20) by means of a system of teeth (4).

3. A device according to Claim 2, characterised in that the tooth system (4) comprises splines.

4. A device according to one of Claims 1 to 3, characterised in that a sleeve-like intermediate member (5) is connected to the blade carrier (3), an inner bearing ring (6) of the rolling bearing (17) being fixed by a screw thread (7) and having the teeth (4) on its inner surface.

5. A device according to one of Claims 1 to 4, characterised in that an externally accessible clamping nut (8) is connected to the rotor (2), an outer bearing ring (9) of the rolling bearing (17) being secured by a screw thread (10).

6. A device according to one of Claims 1 to 5, characterised in that the blade carrier (3) is mounted by means of a two-row taper roller bearing.

7. A device according to one of Claims 4 to 6, characterised in that the intermediate member (5) is provided with an outer ring flange (11) which clamps the inner bearing ring (6) against the blade carrier (3).

8. A device according to Claim 1, characterised in that the dovetail support (12) is inclined to the rotor axis.

9. A device according to Claim 8, characterised in that for axially locking the prop-fan blade (1), retaining plates (13) are provided which are fitted radially into transverse grooves in the blade carrier and a blade root (14) which is constructed in a dovetailed pattern, the retaining plates (13) being secured by a key (15) pushed axially under the blade root (14).

10. A device according to one of Claims 8 or 9, characterised in that the dovetail support (12) is of arcuate construction, being adapted to the profile of the blade.

11. A device for fixing an encased pivotable prop-fan blade (1) on a rotor (2), in which the prop-fan blade (1) is fixed on a blade carrier (3), this latter being mounted via a rolling bearing (17) so that it pivots about a radial axis in relation to the propulsion unit, characterised in that the prop-fan blade has a disc-like blade root which is separably fixed by means of a divided clamping ring (16) in the adapted plate-like upper part of the blade carrier (3), the blade carrier (3) being secured against radial movement by means of an externally accessible locking means (8).

## Revendications

1. Dispositif pour la fixation d'une pale de turbo-soufflante (1) à pas variable avec revêtement, sur un rotor (2), dans lequel la pale de turbosoufflante (1) est fixé sur un support de pale (3) et celui-ci est monté au moyen d'un roulement à rouleaux (17) autour d'un axe radial motopropulseur en pouvant pivoter dans le rotor (2), dispositif caractérisé en ce que la pale de turbo-soufflante (1) est maintenue dans un support (12) en queue d'aronde dans le support de pale (3)et est fixée au moyen d'une première sécurité (13, 15) empêchant tout mouvement axial de la pale de turbo-soufflante (1) et le support de pale (3) est fixé au moyen d'une deuxième sécurité (8) accessible de l'extérieur empêchant tout mouvement radial.

2. Dispositif selon la revendication 1, caractérisé en ce que le support de pale (3) est relié au moyen d'un engrènement (4) à un levier de pivotement (20) de façon rigide en torsion.

3. Dispositif selon la revendication 2, caractérisé en ce que l'engrènement (4) est un engrènement cannelé.

4. Dispositif selon l'une des revendications 1 à 3, caractérisé en ce qu'un organe intermédiaire (5) du type d'un douille est relié au support de pale (3) par fixation d'une bague intérieure de roulement (6) du roulement à rouleaux (17) au moyen d'un filetage (7) et présente sur sa face interne l'engrènement (4).

5. Dispositif selon l'une des revendications 1 à 4, caractérisé en ce qu'un écrou tendeur (8), accessible de l'extérieur, est relié au rotor (2) pour fixation d'une bague extérieure de roulement (9) du roulement à rouleaux (17) au moyen d'un filetage (10).

6. Dispositif selon l'une des revendications 1 à 5, caractérisé en ce que le support de pale (3) est monté au moyen d'un roulement à rouleaux coniques à deux rangées.

7. Dispositif selon l'une des revendications 4 à 6, caractérisé en ce que l'organe intermédiaire (5) est pourvu d'une bride annulaire extérieure (11), qui bloque la bague intérieure de roulement (6) contre le support de pale (3).

8. Dispositif selon la revendication 1, caractérisé en ce que le support (12) à queue d'aronde est incliné par rapport à l'axe du rotor.

9. dispositif selon la revendication 8, caractérisé en ce qu'il est prévu des plaques de sécurité (13) pour le blocage axial de la pale de turbo-soufflante (1), qui sont ajustées dans des nervures transversales du support de pale et d'un pied de pale (14) réalisé en queue d'arone radialement à l'intérieur, et sont bloquées par une clavette de sûreté, enfoncée axialement sous le pied de pale (14).

10. Dispositif selon l'une des revendications 8 ou 9, caractérisé en ce que le support (12) en queue d'aronde est réalisé en forme d'arc de façon à s'ajuster au contour du profil de la pale.

11. Dispositif pour la fixation à un rotor (2) d'une pale de turbo-soufflante (1) à pas variable, avec revêtement, dispositif dans lequel la pale de turbo-soufflante (1) est fixée sur un support de pale (3) et celui-ci est monté dans le rotor (2) au moyen d'un roulement à rouleaux (17) autour d'un axe radial motopropulseur de façon à pouvoir pivoter, dispositif caractérisé en ce que la pale de turbo-soufflante (1) présente un pied de pale en forme de plaque, qui est fixé de façon détachable au moyen d'une bague de serrage (16), partagée dans la partie supérieure ajustée en forme de plaque du support de pale (3) et le support de pale (3) est bloqué au moyen d'une sécurité (8) accessible de l'extérieur contre tout mouvement radial.

FIG.1

FIG.2

FIG. 3

FIG. 4

Fig. 5